# EUROPEAN PATENT SPECIFICATION

(11) **EP 1 624 710 B1**
(45) Date of publication and mention of the grant of the patent: **25.06.2008**
(21) Application number: 04103810.0
(22) Date of filing: 06.08.2004
(51) Int. Cl.: H04Q 7/38

(54) **Method and System For Provisioning Wireless Services Using SIM**
Verfahren und System zur Funkdienstbereitstellung mittels eines SIM.
Procedé et systéme pour la fourniture de service radio avec une carte SIM

(43) Date of publication of application: 08.02.2006
(60) Divisional application: 08151643.7
(73) Proprietor: Research In Motion Limited, Waterloo, Ontario N2L 3W8 (CA)
(72) Inventor: Smith, Christopher, N2L 3W8, Waterloo, (CA); Kruis, Dave, N2L 3W8, Waterloo, (CA); Chin, Jerry, N2L 3W8, Waterloo, (CA); Gilhuly, Barry, N2L 3W8, Waterloo, (CA)
(74) Representative: Rickard, David John

(56) References cited:
- WO-A-20/04062248
- US-A1- 2004 082 346

## Description

This invention relates to the field of service provisioning for wireless devices, and more specifically, to provisioning of wireless devices using subscriber identity module ("SIM") information.

Current generations (e.g., "2.5G" and "3G") of wireless mobile communication devices, such as the BlackBerry® handheld developed by Research In Motion Ltd. (RIM®), include microprocessors, information storage capability, and run one or more software applications. Examples of software applications used in these wireless devices include micro-browsers, address books, and email clients. Additionally, this generation of wireless device has access to a plurality of services via the Internet. A 3G wireless device may, for example, be used to browse web sites on the Internet, to transmit and receive graphics, and to execute streaming audio and/or video applications. The transfer of Internet content to and from wireless device is typically facilitated by the Wireless Application Protocol ("WAP"), which integrates the Internet and other networks with wireless network platforms.

Before a consumer can use a wireless device, a number of parameters must be provisioned into the wireless device in order to enable communication services and applications and in order to distinguish the wireless device from others within the communications network. Provisioning may typically include programming the wireless device with a telephone number and programming the wireless network with the serial number and telephone number of the wireless device. Thus programmed, the wireless device and wireless network are enabled to carry calls between the wireless device and the public switched telephone network ("PSTN"). Provisioning may also include programming the wireless network and wireless device to support one or more optional features for the wireless device, such as call forwarding, three-way calling, voice messaging, short messaging, email forwarding, and paging.

Traditionally, provisioning of a wireless device has been performed on the premises of the vendor or distributor of the wireless device. A data port on the wireless device is used to connect the device to a programming system that uploads provisioning data into the wireless device, such as the telephone number assigned to the wireless device, in order to program it for use on the wireless network. Alternatively, the wireless device is programmed through its key pad. This approach requires the often undesirable step of provisioning the wireless device before it can be delivered to a subscriber.

The ability to deliver a wireless device directly to a subscriber without first having to provision the wireless device provides improved speed of delivery to the subscriber and a simplified provisioning process. As such, wireless service providers can sell their wireless devices directly to potential subscribers through, for example, display booths in supermarkets and department stores.

To facilitate such direct sales to potential subscribers, and to make wireless services as convenient and as affordable as possible, over-the-air ("OTA") service provisioning was introduced. In OTA provisioning, simple instructions are provided to guide the buyer through the process of activating the wireless device and signing up for wireless services to become a subscriber. For example, the buyer can activate a new wireless device and sign up for service by dialling a predetermined number (e.g., "*228xx") in accordance with the wireless device's instructions. Dialling the predetermined number on the wireless device keypad automatically initiates a special purpose call that connects the buyer to an operator. The operator requests certain account information from the buyer, such as personal information, a credit card number, and a home billing address. When the account information is collected and the account is set up, the operator instructs the buyer to enter a sequence of passwords, code numbers, menu-selected commands, etc., that enable certain functions in the wireless device.

To automate service provisioning even further, service provisioning solutions now allow at least part of the OTA service provisioning process to be performed by accessing a provisioning server from an unprovisioned wireless device via an Internet connection. Using an Internet connection allows a wireless service provider to consolidate service provisioning applications and data in a central repository.

In addition to provisioning the wireless device, it is also necessary to provision elements in the wireless communications network which are responsible for effecting mobile communications services and applications (e.g., billing plan, voice mail, call forwarding, email, information services, etc.). These elements include servers and other network devices maintained by wireless carriers, service providers ("SPs"), value added resellers ("VARs"), and mobile virtual network operators ("MVNOs").

A wireless carrier or wireless network operator typically owns and operates a wireless network including radio equipment, base stations, antennae, interface equipment, servers, associated landlines, etc. A carrier also manages basic billing and other back-end services needed to sell wireless services to subscribers. The carrier may sell wireless services directly to subscribers in which case the carrier is also a SP. The carrier may also partner with a VAR, a form of SP who sells the carrier's services and may also provide certain additional services. In addition, the carrier may sell otherwise unused network capacity to one or more MVNOs. A MVNO is a SP that does not maintain its own wireless network (i.e., radio equipment). MVNOs may include large retailers, cable operators, and consumer goods companies with important brands. Unlike SPs and VARs, MVNOs offer their own unique content or marketing cachet to subscribers and often serve specific target markets or interests. MVNOs enable carriers to attract new market segments and thereby load their networks more fully. Carriers can devolve marketing, sales, billing, customer relations, and related front and back office functions to MVNOs who may provide these functions more efficiently for their target markets than can the carriers themselves. Thus, SPs, VARs, and MVNOs have similar and often overlapping roles.

One shortcoming of present provisioning systems is that they are carrier focused. They do not address the increase in the number of SPs, VARs, and MVNOs on a carrier's network nor the integration of networks of multiple carriers. In particular, present provisioning systems do not effectively extend the ability to control access and services beyond the carrier to MVNOs, VARs, and other SPs.

The system disclosed by US2004/0082346 is a provisioning system having a backend server for enhanced services for use by an operator of a mobile communication system. The provisioning system, which is generally provided for automatic detection and registration of non-provisioned enhanced-service capable mobile units in the mobile communication system, automatically updates an operator's directory or register of service capable mobile units, thereby enabling usage of the enhanced services for a provisioned, i.e. configured and registered, mobile unit. The provisioning system typically includes a configuration center and an enhanced-service center. As such, US2004/0082346 does not disclose a means for activating services specified by a distinct service provider system through a provisioning system coupled to a carrier system for accessing a wireless network.

A need therefore exists for an improved method and system of provisioning wireless devices. Accordingly, a solution that addresses, at least in part, the above and other shortcomings is desired.

### GENERAL

According to one aspect of the invention, there is provided a method for activating a set of services for a wireless device, the set of services specified by a service provider system, the method comprising: receiving at a provisioning system from the wireless device a service provider identifier for identifying the service provider system and a carrier identifier for identifying a carrier system, the provisioning system coupled to the service provider and carrier systems; identifying the set of services with the service provider identifier; and, transmitting to the wireless device over a wireless network accessed by the carrier system a service profile having information for activating the set of services.

Preferably, the service profile includes a web site address for accessing a site hosted by the provisioning system for the service provider system for downloading the information for activating the set of services.

Preferably, the method further comprises transmitting to the carrier system the service provider identifier for the set of services.

Preferably, the method further comprises determining whether the set of services is supported by the carrier system by comparing the service provider identifier to a list of service provider identifiers corresponding to the carrier identifier.

Preferably, the method further comprises, if the set of services is not supported by the carrier system, identifying a set of services provided by the carrier system with the carrier identifier.

Preferably, the site is for the carrier system.

Preferably, the service provider and carrier identifiers are stored in a memory device of the wireless device.

Preferably, the memory device is a subscriber identity module (SIM).

Preferably, the service provider identifier is stored in an elementary file (EF) stored in the subscriber identity module (SIM).

Preferably, the carrier identifier is stored in one or more of a mobile country code (MCC) field and a mobile network code (MNC) field stored in the subscriber identity module (SIM).

Preferably, the web site address is a uniform resource locator (URL).

Preferably, the set of services includes electronic mail services.

Preferably, the method further comprises enabling the set of services in the provisioning system for the service provider system.

Preferably, the provisioning system is a second service provider system.

In accordance with further aspects of the present invention there is provided an apparatus such as a provisioning system, a method for adapting this system, as well as articles of manufacture such as a computer readable medium having program instructions recorded thereon for practising the method of the invention.

### BRIEF DESCRIPTION OF THE DRAWINGS

Further features and advantages of the embodiments of the present invention will become apparent from the following detailed description, taken in combination with the appended drawings, in which:
FIG. 1 is a block diagram illustrating an exemplary provisioning system adapted for implementing an embodiment of the invention;
FIG. 2 is a block diagram illustrating a wireless network environment including the provisioning system in accordance with an embodiment of the invention;
FIG. 3 is block diagram illustrating the general structural relationships which may exist within a SIM between MF, DF, and EF files;
FIG. 4 is a table illustrating the structure of the EFGID1 file;
FIG. 5 is a table illustrating the structure of the EFGID2 file;
FIG. 6 is a flow chart illustrating operations of modules within a provisioning system for supporting multiple VARs, MVNOs, or SPs with EFGID information in accordance with an embodiment of the invention; and,
FIG. 7 is a flow chart illustrating operations of modules within a provisioning system for the management of subscribers by VARs, MVNOs, or SPs in accordance with an embodiment of the invention.

It will be noted that throughout the appended drawings, like features are identified by like reference numerals.

### DESCRIPTION OF THE PREFERRED EMBODIMENTS

The following detailed description of the embodiments of the present invention does not limit the implementation of the invention to any particular computer programming language. The present invention may be implemented in any computer programming language provided that the operating system ("OS") provides the facilities that may support the requirements of the present invention. A preferred embodiment is implemented in the JAVA™ computer programming language (or other computer programming languages such as C or C++). (JAVA and all JAVA-based trademarks are the trademarks of Sun Microsystems Corporation.) Any limitations presented would be a result of a particular type of operating system or computer programming language and would not be a limitation of the present invention.

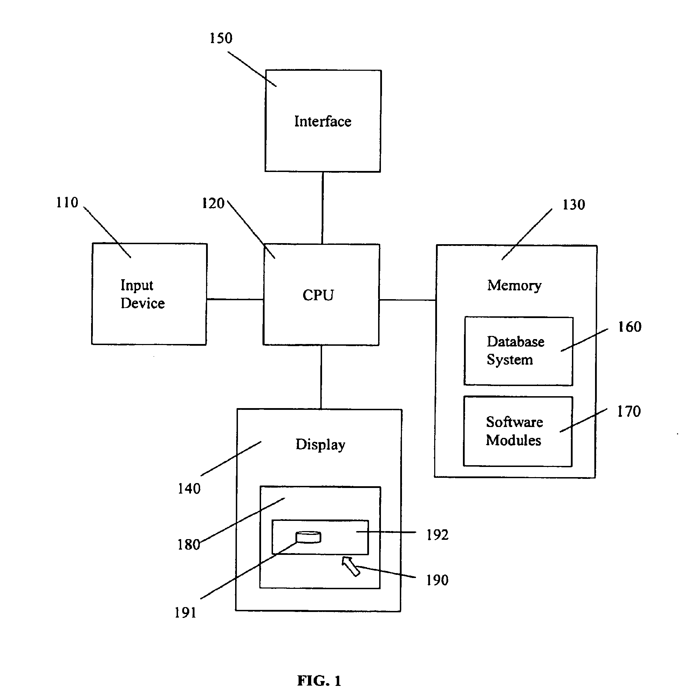

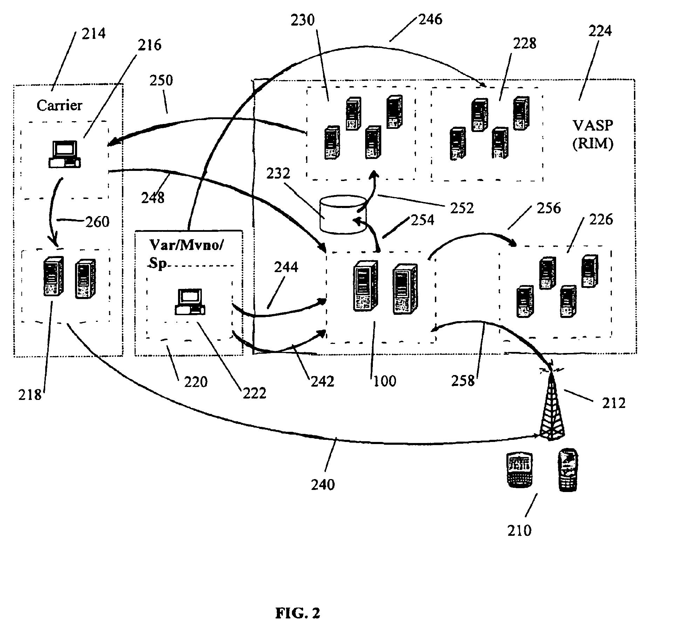

FIG. 1 is a block diagram illustrating an exemplary provisional system 100 adapted for implementing an embodiment of the invention. The provisioning system 100 includes an input device 110, a central processing unit or CPU 120, memory 130, a display 140, and an interface 150. The input device 110 may include a keyboard, mouse, trackball, remote control, or similar device. The CPU 120 may include dedicated coprocessors and memory devices. The memory 130 may include RAM, ROM, or disk devices. The display 140 may include a computer screen, terminal device, or a hardcopy producing output device such as a printer or plotter. And, the interface 150 may include a network connection including an Internet connection. The provisioning system 100 is adapted for provisioning wireless devices 210 in a wireless network environment 200(see FIG. 2).

The provisioning system 100 may be a server system or a personal computer ("PC") system. The CPU 120 of the data provisioning system 100 is operatively coupled to memory 130 which stores an operating system (not shown), such as IBM Corporation's OS/2™, UNIX, etc., for general management of the system 100. The interface 150 may be used for communicating to external data processing systems through a network (see FIG. 2), such as the Internet. Examples of suitable platforms for the provisioning system 100 include iSeries™ servers and ThinkCentre™ personal computers available from IBM Corporation. The provisioning system 100 may include application server software (not shown), such as WebLogic® Server available from BEA Systems, Inc., for developing and managing distributed applications.

The provisioning system 100 may include a database system 160 for storing and accessing programming information. The database system 160 may include a database management system ("DBMS") and a database and is stored in the memory 130 of the provisioning system 100. It will be appreciated that the database system 160 may be shipped or installed without the database to or by end users. In general, the DBMS is adapted to read a query generated by the provisioning system 100 in response to a request for information submitted by a user typically through a user interface. The DBMS then executes the query against the database and provides a query result to the provisioning system 100 for presentation to the user. It will be appreciated that the database system 160 may be stored in the memory 130 of the provisioning system 100 or stored in a distributed provisioning system (see FIG. 2).

Examples of suitable DBMSs include the Oracle® and DB2™ Universal Database Management System products available from Oracle Corporation and IBM Corporation, respectively. The DBMS is a software layer interposed between the actual database (i.e. the data as stored for use by the CPU 120 of the system 100) and the users of the system. The DBMS is responsible for handling database transactions thus shielding users from the details of any specific computer hardware or database implementation. Using relational techniques, the DBMS stores, manipulates and retrieves data in the form of table-like relations typically defined by a set of columns or attributes of data types and a set of rows (i.e. records or tuples) of data. The standard database query language for dealing with relational databases implemented by most commercial DBMSs is the Structured Query Language ("SQL").

The provisioning system 100 includes computer executable programmed instructions for directing the system 100 to implement the embodiments of the present invention. The programmed instructions may be embodied in one or more software modules 170 resident in the memory 130 of the provisioning system 100. Alternatively, the programmed instructions may be embodied on a computer readable medium (such as a CD disk or floppy disk) which may be used for transporting the programmed instructions to the memory 130 of the provisioning system 100. Alternatively, the programmed instructions may be embedded in a computer-readable, signal-bearing medium that is uploaded to a network by a vendor or supplier of the programmed instructions, and this signal-bearing medium may be downloaded through the interface 150 to the provisioning system 100 from the network by end users or potential buyers.

The CPU 120 of the system 100 is typically coupled to one or more devices 110 for receiving user commands or queries and for displaying the results of these commands or queries to the user on a display 140. For example, user queries may be transformed into a combination of SQL commands for producing one or more tables of output data which may be incorporated in one or more display pages for presentation to the user. The CPU 120 is coupled to memory 130 for containing programs 170 and data such as base tables or virtual tables such as views or derived tables. As mentioned, the memory 130 may include a variety of storage devices including internal memory and external mass storage typically arranged in a hierarchy of storage as understood to those skilled in the art.

A user may interact with the provisioning system 100 and its software modules 170 using a graphical user interface ("GUI") 180. The GUI 180 may be web-based and may be used for monitoring, managing, and accessing the provisioning system 100. GUIs are supported by common operating systems and provide a display format which enables a user to choose commands, execute application programs, manage computer files, and perform other functions by selecting pictorial representations known as icons, or items from a menu through use of an input or pointing device such as a mouse 110. In general, a GUI is used to convey information to and receive commands from users and generally includes a variety of GUI objects or controls, including icons, toolbars, drop-down menus, text, dialog boxes, buttons, and the like. A user typically interacts with a GUI 180 presented on a display 140 by using an input or pointing device (e.g., a mouse) 110 to position a pointer or cursor 190 over an object 191 and by "clicking" on the object 191.

Typically, a GUI based system presents application, system status, and other information to the user in "windows" appearing on the display 140. A window 192 is a more or less rectangular area within the display 140 in which a user may view an application or a document. Such a window 192 may be open, closed, displayed full screen, reduced to an icon, increased or reduced in size, or moved to different areas of the display 140. Multiple windows may be displayed simultaneously, such as: windows included within other windows, windows overlapping other windows, or windows tiled within the display area.

FIG. 2 is a block diagram illustrating a wireless network environment 200 including the provisioning system 100 in accordance with an embodiment of the invention. In FIG. 2, the provisioning system 100 is located within a distributed provisioning system 224 which includes a relay system 226, a web client system 228, and a customer relationship management ("CRM") database system 230. The distributed provisioning system 224 is available through RIM®. Of course, the functionality of the relay system 226, web client system 228, and CRM database system 230 may be included within the provisioning system 100.

The CRM database system 230 includes servers for storing and accessing subscriber billing, service provider, and related information. The CRM database system 230 may include CRM applications and enterprise resource planning ("ERP") applications available from SAP® AG. The CRM database system 230 generates invoice messages 250 for carriers 214 (which may also be SPs) and which include information identifying which VARs, MVNOs, or SPs 220 a subscriber or wireless device 210 is associated with.

The provisioning system 100 is interfaced to the CRM database system 230 through a transaction database 232 which is typically an offline queue (i.e., not real-time). The provisioning system 100 passes updated and newly created service contract messages 254 to the transaction database 232. In turn, the transaction database 232 passes corresponding update messages 252 to the CRM database system 230.

The web client system 228 includes servers for providing an Internet-based email interface for wireless device subscribers. Through the web client 228, email is directed to wireless devices 210 over the wireless network 212. The web client 228 allows subscribers to add email account services for operation through their wireless devices 210. Email is redirected wirelessly to subscribers' wireless devices 210 so that subscribers can send, receive, forward, and reply to messages wirelessly. In addition, the web client system 228 allows subscribers to access their email account over the Internet with a landline based PC. Each carrier 214 and VAR, MVNO, or SP 220 may have its own web client system 228 site (i.e., a "web client site") for its subscribers. Services provided by the web client site are configurable based on the carrier 214 or VAR/MNVO/SP 220. Advantageously, not only can carriers 214 access a web client 228 site to manage subscriber setting 246, but so can VARs, MVNOs, and other SPs 220.

The relay system 226 includes servers for transferring information between the provisioning system 100 and wireless devices 210 over the wireless network 212. As discussed above, the wireless network 212 is generally owned and operated by a carrier 214. It is through the relay system 226 that the provisioning system 100 is coupled to the wireless network 212. The relay system 226 handles a variety of low level operations for subscribers 210. The relay system 226 receives registration messages 258 from wireless devices 210 and passes these messages to the provisioning system 100. In return, the provisioning system 100 passes enable/block service access messages 256 to the relay system 226.

Each carrier 214 which is a SP has a carrier customer service system 216 which is coupled to a carrier provisioning system 218. The carrier customer service system 216 may be similar in component configuration to the provisioning system 100 (see FIG. 1). The carrier customer service system 216 provides the carrier provisioning system 218 with activate subscriber messages 260. In turn, the carrier provisioning system 218 provides activate network service messages 240 to the wireless network 212 for transmission to the distributed provisioning system 224 and/or wireless devices 210. In addition, and as mentioned above, the carrier customer service system 216 of the carrier 214 receives invoice messages (including VAR/MNVO/SP information) 250 from the CRM database system 230. Furthermore, the carrier customer service system 216 provides manage VAR/MVNO/SP configuration messages 248 to the provisioning system 100.

Each VAR/MVNO/SP 220 includes a VAR/MVNO/SP customer service system 222. The VAR/MVNO/SP customer service system 222 is typically coupled to the distributed provisioning system 224 through landlines. The VAR/MVNO/SP customer service system 222 provides the provisioning system 100 with subscriber service assignment messages 244 and device service assignment messages 242. In addition, the VAR/MVNO/SP customer service system 222 provides the web client system 228 with manage web client site/subscriber settings messages 246.

Using their customer service systems 216, 222, carrier and VAR/MVNO/SP users can log in via a Web based user interface to the distributed provisioning system 224 to manage provisioning aspects of their respective subscribers 210. The user interface for a VAR/MVNO/SP is similar to that of a carrier, except the VAR/MVNO/SP is only allowed to manage its own subscribers while the carrier can manage any of the subscribers of its associated VARs/MVNOs/SPs. Alternatively, the carrier can be prevented from managing the subscribers of its associated VARs/MVNOs/SPs. This is configurable and is dependent on the relationship between the carrier and its VARs/MVNOs/SPs. Appropriate error messages are provided by the distributed provisioning system 224 when a VAR/MVNO/SP attempts to access another's subscriber.

Thus, the distributed provisioning system 224 acts as an intermediary between carriers 214, VARs, MVNOs, SPs 220, and wireless device subscribers 210, providing email forwarding, related billing, provisioning, and other services. In effect, the distributed provisioning system 100 is a form of SP providing specialized support and services for wireless devices such as the BlackBerry® handheld. RIM@ presently acts as such a SP providing provisioning and related services through its BlackBerry® service. As such, SPs such as RIM® are sometimes referred to as value added service providers ("VASPs"). Of course, the BlackBerry® service may be re-branded and offered by other SPs to their subscribers.

The present invention extends the ability to control access and services beyond the carrier 214 to MVNOs, VARs, and similar SPs 220. According to one embodiment of the invention, this is accomplished using Subscriber Identity Module ("SIM") information to identify subscribers as MVNO, VAR or SP subscribers. A SIM is a small, stamp-sized "smart card" that is used in a Global System for Mobile Communications ("GSM") wireless device 210. Typically, the SIM contains a microchip that stores data that identifies the subscriber 210 to the carrier 214. The SIM also stores data used to encrypt voice and data transmissions, phone book information, etc. Typically, the SIM can be removed from a first wireless device and place in a second wireless device. This enables the second wireless device to use information such as the subscriber's telephone and account numbers. The interface between a SIM and a wireless device 210 within a wireless network 212 is defined in European Telecommunications Standards Institute ("ETSI") standard GSM 11.11 Version 6.2.0 Release 1997 ("Digital Cellular Telecommunications System (Phase 2+); Specification of the Subscriber Identity Module - Mobile Equipment (SIM - ME) Interface"), which is incorporated herein by reference.

According to one embodiment of the invention, in a SIM swap scenario as described above, the services associated with the wireless device will be updated if the VAR/MVNO/SP associated with the new SIM has different defaults. Similarly, if a SIM swap does not occur but the SIM information is updated and a re-registration occurs, the wireless device will also be updated.

Now, a carrier 214 can be uniquely identified through the Mobile Country Code ("MCC") and Mobile Network Code ("MNC") assigned to the subscriber and stored in the SIM of the subscriber's wireless device 210. As described above, a carrier 214 may have relationships with various partners (e.g., VARs, MVNOs, and SPs) 220 who are responsible for a sub-set of subscribers or services. In each case, these partners use the carrier's network resources. Subscribers owned by a partner 220 are identified by the SIM which is typically owned by the carrier 214. The SIM is able to identify the carrier 214 by the MCC/MNC information contained in the International Mobile Subscriber Identity ("IMSI") file. Often the carrier 214 needs to know which partners 220 are responsible for the services and fees associated with a particular subscriber 210. Also, the carrier 214 may want to delegate service control to their partner 220 and manage what services are available for default assignment.

According to one embodiment of the invention, the provisioning system 100 (or distributed provisioning system 224) uses information stored in the Elementary File Group Identifier ("EFGID") file specified by the GSM 11.11 standard to allow for the identification of a subscriber 210 as belonging to a specific MVNO, VAR or SP 220. A flexible interface 216 is provided to the carrier 214 to define partners 220 and identify EFGID mappings for these partners 220. Carriers 214 are able to control what services can be assigned by the partner 220 to their subscribers or handsets 210. MVNOs, VARs and SPs 220 have access to an interface 222 to manage service provisioning and access control for their subscribers within the boundaries set by the carrier 214. Different VARs/MVNOs/SPs 220 can have different service offerings and different configuration options to brand the end-user experience to their requirements. Also, the partner information is communicated to the carrier 214 for each subscriber as part of the billing and reconciliation process 250.

To reiterate, multiple VARs/MVNOs/SPs 220 may be supported by using EFGID information. The VARs/MVNOs/SPs 220 associated with a carrier 214 are able to manage their own subscribers 210. The EFGID information from the SIM is used to identify the VAR/MVNO/SP 220 to which the subscriber 210 belongs. The carrier 214 is also able to have the EFGID and the VAR/MVNO/SP identity appear in the billing comment data 250 that it receives from the distributed provisioning system 224. Furthermore, the carrier 214 is able to communicate messages 248 to the distributed provisioning system 248 to manage its associated VARs/MVNOs/SPs 220 using, for example, a WebService interface (e.g., XML, SOAP, etc.). Advantageously, by providing the ability to control exactly what services are accessible to the subscriber base, targeted product offerings and pricing for various end-user communities is facilitated.

According to the GSM 11.11 standard, a "file" is a directory or an organized set of bytes or records in the SIM. A Dedicated File ("DF") is a file containing access conditions and, optionally, Elementary Files or other DFs. An Elementary File ("EF") is a file containing access conditions and data and no other files. And, a Master File ("MF") is the unique mandatory file containing access conditions and optionally DFs and/or EFs.

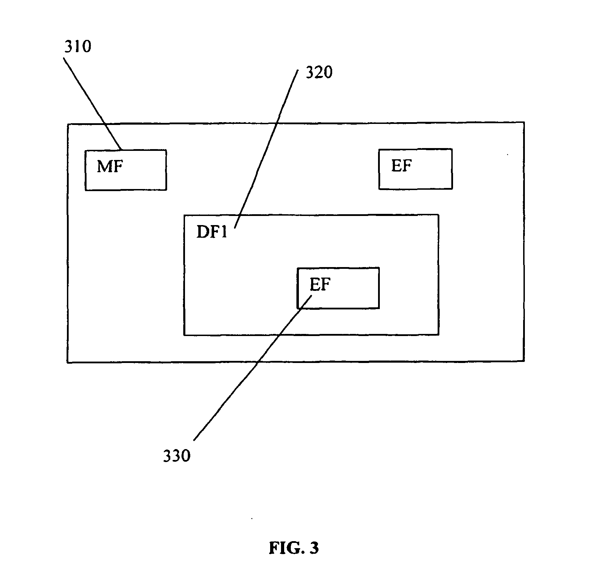

FIG. 3 is block diagram illustrating the general structural relationships which may exist within a SIM between MF 310, DF 320, and EF 330 files. In general, files are composed of a header, which is internally managed by the SIM, and optionally a body part. The information of the header is related to the structure and attributes of the file. The body part contains the data of the file. Each EF file 330 is composed of a header and a body part. The following three structures for an EF are used by GSM: transparent, linear fixed, and cyclic.

An EF 330 with a transparent structure consists of a sequence of bytes. When reading or updating, the sequence of bytes to be acted upon is referenced by a relative address (offset), which indicates the start position (in bytes), and the number of bytes to be read or updated. The first byte of a transparent EF has the relative address '00 00'. The total data length of the body of the EF is indicated in the header of the EF.

In addition, EFs may be classified as mandatory or optional. The file size of an optional EF may be zero. All implemented EFs with a file size greater than zero shall contain all mandatory data items. Optional data items may either be filled with 'F', or, if located at the end of an EF, need not exist.

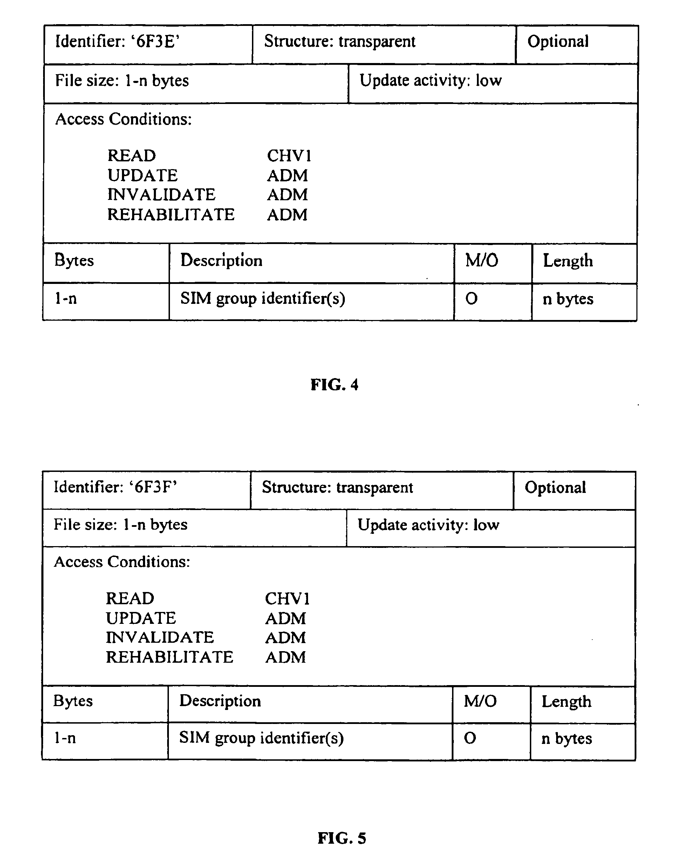

According to the GSM 11.11 standard, there are two EFGID files: EFGID1 (Group Identifier Level 1) and EFGID2 (Group Identifier Level 2). EFGID1 is an EF containing identifiers for particular SIM-ME associations. It can be used to identify a group of SIMs for a particular application. The structure of the EFGID1 file is shown in FIG. 4. Similarly, the EFGID2 is an EF containing identifiers for particular SIM-ME associations. It too can be used to identify a group of SIMs for a particular application. The structure of the EFGID2 file is shown in FIG. 5. Note that the structure of EFGID1 and EFGID2 are identical. They are provided under the GSM 11.11 standard to allow the carrier to enforce different levels of security dependant on application.

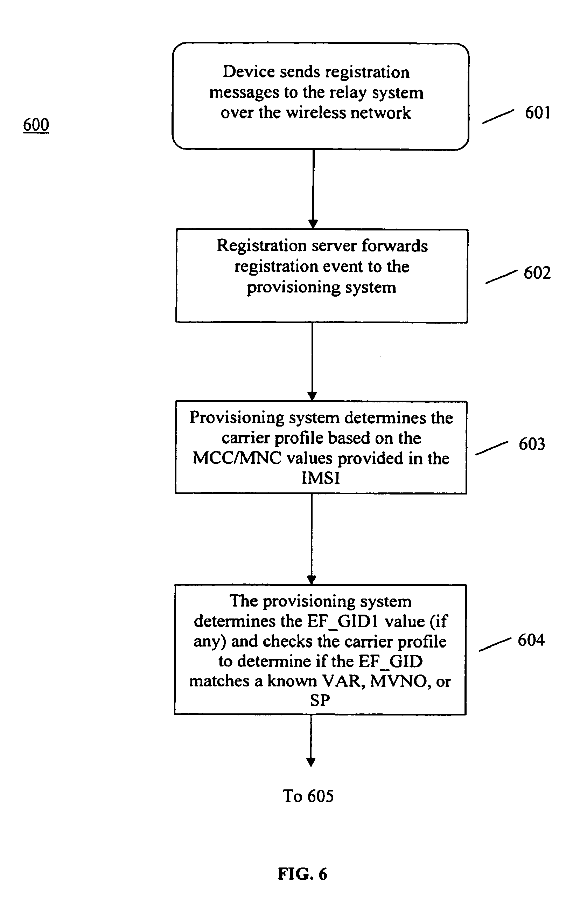

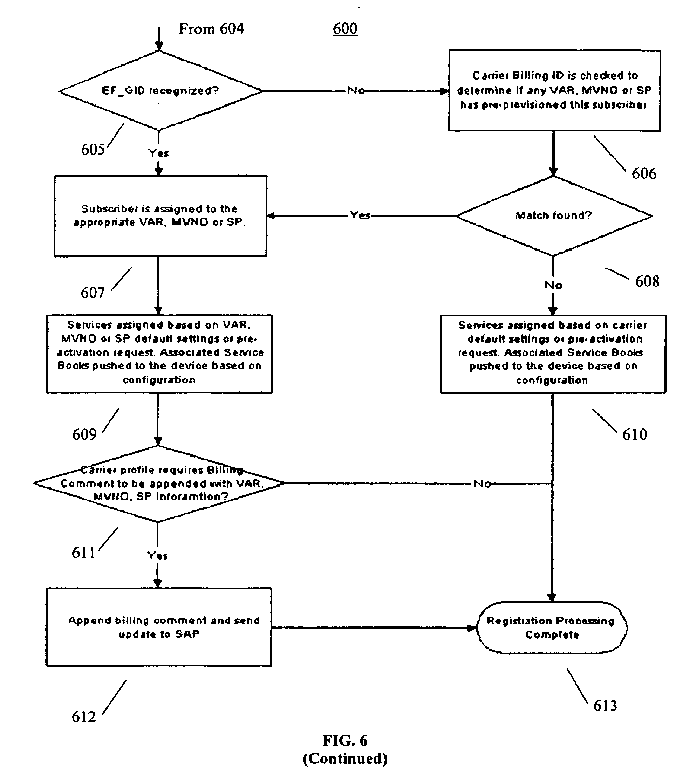

FIG. 6 is a flow chart illustrating operations 600 of modules 170 within a provisioning system 100, 224 for supporting multiple VARs, MVNOs, or SPs 220 with EFGID information in accordance with an embodiment of the invention.

At step 601, the operations 600 start. The wireless device 210 sends registration messages 258 to the relay system 226 over the wireless network 212.

At step 602, a registration server (not shown) in the relay system 226 forwards the registration messages 258 to the provisioning system 100 of the distributed provisioning system 224.

At step 603, the provisioning system 100 determines a carrier profile based on the MCC/MNC values provided in the IMSI of the registration messages 258. The MCC/MNC value may be referred to as a "carrier identifier".

At step 604, the provisioning system 100 determines the EFGID1 value (if any) from the registration messages 258 and checks the carrier profile to determine if the EFGID1 value matches a known VAR, MVNO, or SP 220. The EFGID1 value may be referred to as a "service provider identifier".

At step 605, a determination is made as to whether the EFGID1 value is recognized.

At step 606, if the EFGID1 value is not recognized 605, then a carrier billing ID is checked to determine if any VAR, MVNO, or SP 220 has pre-provisioned the subscriber 210.

At step 607, if the EFGID1 value is recognized 605, then the subscriber 210 is assigned to the appropriate VAR, MVNO, or SP 220.

At step 608, a determination is made as to whether any VAR, MVNO, or SP 220 has pre-provisioned the subscriber 210. If the subscriber 210 has been pre-provisioned, operations proceed to step 607.

At step 610, if the subscriber 210 has not been pre-provisioned 608, then services are assigned based on carrier default settings or a pre-activation request. Associated service books are pushed 240 to the wireless device 210 based on the corresponding configuration. A service book contains information that informs the wireless device 210 about how to interact with the provisioning system 100, 224 and allows the different services that can be enabled for the wireless device 210. Thus, service books provide the wireless device 210 with a service profile.

At step 609, continuing from step 607, services are assigned based on VAR, MVNO, or SP default settings or a pre-activation request. Associated service books are pushed 240 to the wireless device 210 based on the corresponding configuration.

At step 611, a determination is made as to whether the carrier profile requires a billing comment 250 to be appended with VAR, MVNO, and SP information. If no billing comment is required, operations proceed to step 613.

At step 612, if a billing comment is required, the billing comment is appended and the CRM database system 230 is updated accordingly.

At step 613, the operations 600 end with the completion of registration processing.

Modules 170 within the provisioning system 100, 224 contain additional operations for supporting multiple VARs/MVNOs/SPs 220 with EFGID information. In particular, a carrier 214 (i.e., an administrator associated with the carrier) can specify via a Web interface to the provisioning system 100, 224 a variety of information pertaining to its profile. The carrier 214 with a VAR/MVNO/SP 220 can specify the length of the EFGID1 field in the SIM in terms of bytes. Once the length is determined, all EFGID values are expressed as the hex representation of that sequence of bytes, including leading 0s. In addition, the carrier 214 can specify if the EFGID value, or the corresponding VAR/MVNO/SP name, or both should be appended to the billing comment 250. A field delimiting string may be specified as well.

In addition, operations are provided for allowing a carrier 214 to create a VAR/MVNO/SP 220. A carrier 214 can log in via a Web interface to the provisioning system 100, 224 and create 248 a VAR/MVNO/SP 220 and assign to it one or more unique EFGID values (HEX strings). A VAR/MVNO/SP 220 may have more than one EFGID value assigned to it. The EFGID value specified is actually the EFGID1 value stored in a subscriber's SIM. According to the GSM 11.11 standard, as discussed above, the EFGID1 field is an optional EF in a SIM that may contain 1 to n bytes (see FIG. 4). The carrier 214 can then proceed to create an administration account for the VAR/MNVO/SP 220. The carrier 214 has complete control over the VAR/MNVO/SP 220. For example, the carrier 214 can create or remove a VAR/MVNO/SP 220 that belongs to it. In addition, the carrier 214 can manage (i.e., activate, deactivate, suspend, resume, etc) any subscriber 210 of any VAR/MVNO/SP 220. Alternatively, a configuration setting can allow the carrier 214 to select which EF in the SIM to use for VAR/MVNO/SP 220 identification.

A VAR/MVNO/SP 220 (i.e., an administrator associated with the VAR/MVNO/SP) can create additional accounts. A VAR 220 can log in via a Web interface to the provisioning system 100, 224 and create additional accounts (e.g., Manager and Support Staff) and assign permissions to each account 242, 244.

In addition, a VAR/MNVO/SP 220 can manage its own subscribers 210. Each VAR/MVNO/SP 220 has access to only its subscribers 210.

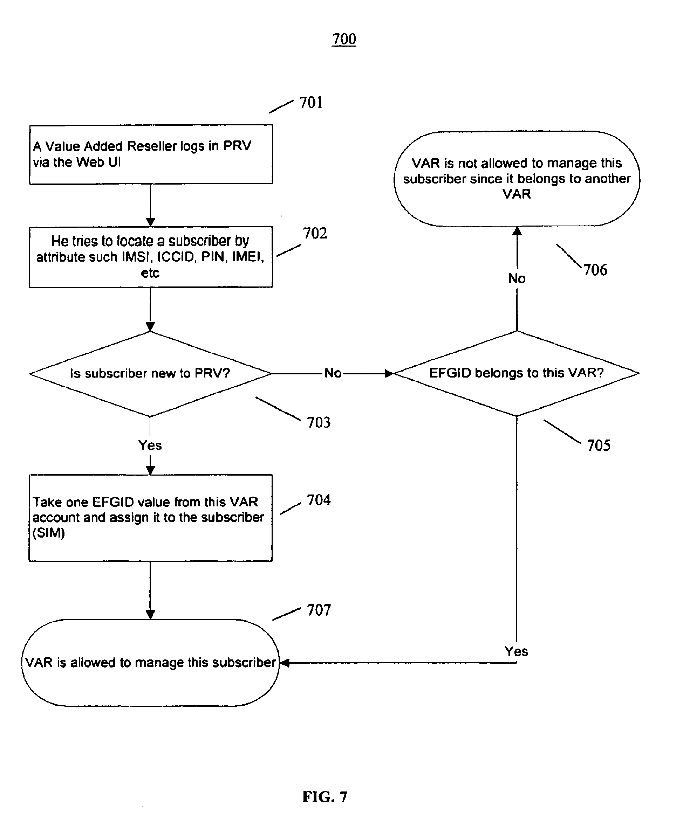

FIG. 7 is a flow chart illustrating operations 700 of modules 170 within a provisioning system 100, 224 for the management of subscribers 210 by VARs, MVNOs, or SPs 220 in accordance with an embodiment of the invention.

At step 701, the operations 700 start. A VAR/MNVO/SP 220 logs in via a Web interface to the provisioning system 100, 224.

At step 702, the VAR/MNVO/SP 220 attempts to locate a subscriber 210 by checking attributes such as IMSI, ICCID (Integrated Circuit Card Identifier), PIN (Personal Identification Number), IMEI (International Mobile Equipment Identity), etc.

At step 703, a determination is made as to whether the subscriber 210 is new to the provisioning system 100, 224.

At step 704, if the subscriber 210 is new 703 to the provisioning system 100, 224 then one EFGID value is selected from the VAR/MVNO/SP account and assigned to the subscriber's SIM.

At step 705, if the subscriber 210 is not new 703 to the provisioning system 100, 224, then a determination is made as to whether the EFGID value belongs to the VAR/MVNO/SP 220. If the EFGID belongs to the VAR/MVNO/SP 220, operations continue to step 707.

At step 706, if the EFGID does not belong to the VAR/MNVO/SP 220, the VAR/MVNO/SP 220 is not allowed to manage the subscriber 210 since the subscriber 210 belongs to another VAR/MNVO/SP 220.

At step 707, continuing from steps 704 or 705, the operations 700 end with the VAR/MNVO/SP 220 being allowed to manage the subscriber 210.

A VAR/MNVO/SP 220 can also manage its subscribers 210 via a WebService interface (e.g., XML, SOAP, etc.) to the provisioning system 100, 224. As long as the subscriber 210 belongs to the VAR/MNVO/SP 220, or the subscriber 210 is new (i.e., before registration), the VAR/MNVO/SP 220 can perform actions such as activate, suspend, resume, deactivate, assign, change billing id or status for its subscriber 210.

As mentioned, operations are provided for allowing a billing comment change upon registration. The carrier 214 can select to append an EFGID value or the corresponding VAR/MNVO/SP name to a billing comment. If the provisioning system 100, 224 detects a change of EFGID upon registration, the billing comment is changed to reflect the latest EFGID value or VAR/MVNO/SP name.

Furthermore, operations are provided for web client site verification. As mentioned, each VAR/MVNO/SP 220 can have it own web client site, which may or may not be the same as the carrier's web client site. Each VAR/MNVO/SP can choose to create a web client account either on its web client site or on the carrier's web client site. When a subscriber registers, the provisioning system 100, 224 pushes the VAR/MNVO/SP's service book to the subscriber's wireless device 210, if a web client account was created prior to registration. Otherwise, the carrier's service book is pushed. When a subscriber tries to set up a web client account via the web client system's Web user interface, the provisioning system 100, 224 ensures that the web client site of the subscriber corresponds to that of its VAR/MNVO/SP 220 or its carrier 214.

With respect to supporting multiple VARs/MVNOs/SPs with EFGID information, note that the EFGID information is retrieved by the relay system 226. The EFGID1 and EFGID2 fields are optional parameters (1 to n bytes) stored in a SIM. The relay system 226 encodes EFGID1 and EFGID2 information in Base64 and sends this information 258 to the provisioning system 100. A registration interface of the provisioning system 100 decodes the EFGID1 field with Base64. The EFGID2 value is not used and is discarded. In addition, the registration interface discards all invalid EFGID1 values. The registration interface determines the VAR/MVNO/SP based on the IMSI and EFGID1 values and passes the validated EFGID1 value to downstream components 230.

Based on EFGID information, subscribers are provided with specific, configurable service books (i.e., for WAP, browsing, etc.). In addition, the provisioning system 100, 224 allows for the assignment of a separate web client site to each VAR/MVNO/SP 220 associated with a particular carrier 214. Moreover, a user interface to the provisioning system 100, 224 is provided allowing a carrier 214 to have super-user control over all VARs/MVNOs/SPs 220 under its control umbrella. The user interface also allows each carrier 214 to specify its particular EFGID1 format, specifically the number of bytes the carrier 214 stores in the SIM of its wireless devices 210. In addition, the user interface allows each carrier 214 to create a VAR/MVNO/SP 220 and associate to that VAR/MVNO/SP 220 a valid EFGID value.

According to the present invention, carriers 214 and VARs/MVNOs/SPs 220 receiving services from the provisioning system 100, 224 receive enhancement accounting bills, typically on a monthly basis. These bills include EFGID information including VAR/MVNO/SP name, typically as a billing comment. The registration interface of the provisioning system 100 ensures that the proper billing comment is created and used.

Consider the following example of the operation of the present invention. As preconditions, a profile is created in the provisioning system 100, 224 for a carrier named "T-Mobile Germany". The MCC/MNC mapping for T-Mobile Germany is configured for MCC = 262 and MNC = 010-019. Associated with the carrier is a VAR named "Debitel" which is assigned EFGID1 = 12. The carrier is configured with default services entitled "Enterprise" and "Prosumer" and has a web client site entitled "tmode". The VAR is configured with default services "Prosumer Only" service and has a web client site entitled "debitel". The billing comment for the carrier is configured as "Other" with "Value Added Reseller Name" and "ID" included in an "Extra" field.

Now, in operation, the following steps are performed:
1. A wireless device 210 having IMSI = 262011743013951 and EFGID1 = 12 registers with the relay system 226 of the distributed provisioning system 224;
2. A corresponding registration event is received by the provisioning system 100;
3. The provisioning system 100 retrieves the carrier's profile based on MCC=262 and MNC=011;
4. The provisioning system 100 retrieves the VAR's profile based on EFGID1 = 12;
5. "Prosumer Only" service is activated for the wireless device 210 (i.e., subscriber) based on the VAR's profile;
6. The provisioning system 100 sends a service book (or profile) to the wireless device 210 which contains configuration settings for all services to be enabled for the subscriber. One element of the service book (or profile) is a VAR specific (i.e., "debitel") web client site address (e.g., a uniform resource locator ("URL")) for self-provisioning of the wireless device 210; and,
7. The CRM database system 230 is updated with a "Billing Comment" for the carrier of "12 - Debitel". In addition, the services are enabled in the provisioning system 100, 224 for the subscriber.

Advantageously, the present invention supports a unique relationship between carriers 214 and VARs, MVNOs, or SPs 220 in which the carrier 214 can be billed by an intermediary 224, for services such a email forwarding, etc., rather than the subscriber 210 directly. At the same time, each VAR, MVNO, or SP 220 can manage its subscribers 210 through its own web client site.

While this invention is primarily discussed as a method, a person of ordinary skill in the art understands that the apparatus discussed above with reference to a provisioning system may be programmed to enable the practice of the method of the invention. Moreover, an article of manufacture for use with a provisioning system, such as a prerecorded storage device or other similar computer readable medium including program instructions recorded thereon may direct the provisioning system to facilitate the practice of the method of the invention. It is understood that such apparatus and articles of manufacture also come within the scope of the invention.

The embodiment(s) of the invention described above is(are) intended to be exemplary only. The scope of the invention is therefore intended to be limited solely by the scope of the appended claims.

## Claims

1. A method for activating a set of services for a wireless device (210), the set of services specified by a service provider system (220), the method comprising:
receiving at a provisioning system (100; 224) from the wireless device a service provider identifier for identifying the service provider system and a carrier identifier for identifying a carrier system (214), the provisioning system coupled to the service provider and carrier systems;
identifying the set of services with the service provider identifier; and,
transmitting to the wireless device over a wireless network (200) accessed by the carrier system a service profile having information for activating the set of services.

2. The method of claim 1 wherein the service profile comprises a web site address for accessing a site hosted by the provisioning system (100; 224) for the service provider system (220) for downloading the information for activating the set of services.

3. The method of claim 1 or claim 2 and further comprising:
transmitting to the carrier system (214) the service provider identifier for the set of services.

4. The method of any one of claims 1 to 3 and further comprising:
determining whether the set of services is supported by the carrier system (214) by comparing the service provider identifier to a list of service provider identifiers corresponding to the carrier identifier.

5. The method of claim 4 and further comprising:
if the set of services is not supported by the carrier system (214), identifying a set of services provided by the carrier system with the carrier identifier.

6. The method of any one of claims 2 to 5 wherein the site is for the carrier system (214).

7. The method of any one of claims I to 6 wherein the service provider (220) and carrier identifiers are stored in a memory device of the wireless device (210).

8. The method of claim 7 wherein the memory device is a subscriber identity module (SIM).

9. The method of claim 8 wherein the service provider identifier is stored in an elementary file (EF) (330) stored in the subscriber identity module (SIM).

10. The method of claim 8 or claim 9 wherein the carrier identifier is stored in one or more of a mobile country code (MCC) field and a mobile network code (MNC) field stored in the subscriber identity module (SIM).

11. The method of any one of claims 2 to 10 wherein the web site address is a uniform resource locator (URL).

12. The method of any one of claims 1 to 11 wherein the set of services comprises electronic mail services.

13. The method of any one of claims 1 to 12 and further comprising:
enabling the set of services in the provisioning system (100; 224) for the service provider system (220).

14. The method of any one of claims 1 to 13 wherein the provisioning system (100; 224) is a second service provider system.

15. A system (100; 224) for activating a set of services for a wireless device, the set of services specified by a service provider system (220), the system comprising: a processor (120) coupled to memory (130) and an interface (150) to a wireless network (200) and adapted for implementing the method of any one of claims 1 to 14.

16. A computer program product having a computer readable medium tangibly embodying computer executable code for directing a provisioning system (100; 224) to activate a set of services for a wireless device (210), the set of services specified by a service provider system (220), said computer program product comprising: code for implementing the method of any one of claims 1 to 14.

17. A mobile wireless device (210) operable within a wireless network (200), said mobile device having a computer readable medium tangibly embodying computer code executable on a processor of said mobile device for controlling said mobile device to provide to a wireless device provisioning system (100; 224) a service provider identifier and a carrier identifier and to receive from said provisioning system a service profile having information for activating a set of services specified by a service provider system (220).

## Patentansprüche

1. Verfahren zum Aktivieren einer Menge von Diensten für ein drahtloses Gerät (210), wobei die Menge von Diensten von einem Diensteanbietersystem (220) spezifiziert wird, wobei das Verfahren Folgendes umfasst:
Empfangen eines Diensteanbieteridentifizierers zum Identifizieren des Diensteanbietersystems und eines Carrier-Identifizierers zum Identifizieren eines Carrier-Systems (214) an einem Bereitstellungssystem (100; 224) von dem drahtlosen Gerät, wobei das Bereitstellungssystem mit dem Diensteanbieter- und dem Carrier-System verbunden ist;
Identifizieren der Menge von Diensten mit dem Diensteanbieteridentifizierer; und
Übermitteln eines Dienstprofils mit Informationen zum Aktivieren der Menge von Diensten an das drahtlose Gerät über ein Drahtlosnetz (200), auf das das Carrier-System zugreift.

2. Verfahren nach Anspruch 1, wobei das Dienstprofil eine Website-Adresse zum Zugreifen auf eine von dem Bereitstellungssystem (100; 224) verwaltete Site für das Diensteanbietersystem (220) zum Herunterladen der Informationen zum Aktivieren der Menge von Diensten umfasst.

3. Verfahren nach Anspruch 1 oder Anspruch 2, das des Weiteren Folgendes umfasst:
Übermitteln des Diensteanbieteridentifizierers für die Menge von Diensten an das Carrier-System (214).

4. Verfahren nach einem der Ansprüche 1 bis 3, das des Weiteren Folgendes umfasst:
Ermitteln, ob die Menge von Diensten von dem Carrier-System (214) unterstützt wird, indem der Diensteanbieteridentifizierer mit einer Liste mit dem Carrier-Identifizierer entsprechenden Diensteanbieteridentifizierern verglichen wird.

5. Verfahren nach Anspruch 4, das des Weiteren Folgendes umfasst:
falls die Menge von Diensten nicht von dem Carrier-System (214) unterstützt wird, Identifizieren einer Menge von von dem Carrier-System bereitgestellten Diensten mit dem Carrier-Identifizierer.

6. Verfahren nach einem der Ansprüche 2 bis 5, wobei die Site für das Carrier-System (214) vorgesehen ist.

7. Verfahren nach einem der Ansprüche 1 bis 6, wobei die Identifizierer des Diensteanbieters (220) und des Carriers in einer Speichervorrichtung des drahtlosen Geräts (210) gespeichert sind.

8. Verfahren nach Anspruch 7, wobei die Speichervorrichtung ein Teilnehmeridentifizierungsmodul (Subscriber Identity Module, SIM) ist.

9. Verfahren nach Anspruch 8, wobei der Diensteanbieteridentifizierer in einer in dem Teilnehmeridentifizierungsmodul (Subscriber Identity Module, SIM) gespeicherten Elementardatei (Elementary File, EF) (330) gespeichert ist.

10. Verfahren nach Anspruch 8 oder Anspruch 9, wobei der Carrier-Identifizierer in jeweils einem Feld eines Mobilfunk-Länderkennzeichnungscodes (Mobile Country Code, MCC) oder einem Feld eines Mobilfunk-Netzcodes (Mobile Network Code, MNC) oder mehreren davon gespeichert ist, die in dem Teilnehmeridentifizierungsmodul (Subscriber Identity Module, SIM) gespeichert sind.

11. Verfahren nach einem der Ansprüche 2 bis 10, wobei die Website-Adresse ein Uniform Resource Locator (URL) ist.

12. Verfahren nach einem der Ansprüche 1 bis 11, wobei die Menge von Diensten Emaildienste umfasst.

13. Verfahren nach einem der Ansprüche 1 bis 12, das des Weiteren Folgendes umfasst:
Aktivieren der Menge von Diensten in dem Bereitstellungssystem (100; 224) für das Diensteanbietersystem (220).

14. Verfahren nach einem der Ansprüche 1 bis 13, wobei das Bereitstellungssystem (100; 224) ein zweites Diensteanbietersystem ist.

15. System (100; 224) zum Aktivieren einer Menge von Diensten für ein drahtloses Gerät, wobei die Menge von Diensten von einem Diensteanbieter (220) spezifiziert wird, wobei das System Folgendes umfasst: einen Prozessor (120), der mit einem Speicher (130) und einer Schnittstelle (150) zu einem Drahtlosnetz (200) verbunden und zum Durchführen des Verfahrens nach einem der Ansprüche 1 bis 14 angepasst ist.

16. Computerprogrammprodukt, das ein computerlesbares Medium aufweist, das computerausführbaren Code zum Anweisen eines Bereitstellungssystems (100; 224) zum Aktivieren einer Menge von Diensten für ein Funkgerät (210) konkret verkörpert, wobei die Menge von Diensten von einem Diensteanbietersystem (220) spezifiziert wird, wobei das Computerprogrammprodukt Folgendes umfasst: Code zum Durchführen des Verfahrens nach einem der Ansprüche 1 bis 14.

17. In einem Drahtlosnetz (200) betriebsfähiges drahtloses Mobilgerät (210), wobei das mobile Gerät ein computerlesbares Medium aufweist, das Computercode konkret verkörpert, der auf einem Prozessor des mobilen Geräts zum Steuern des mobilen Geräts ausführbar ist, um an ein Bereitstellungssystem (100; 224) eines drahtlosen Geräts einen Diensteanbieteridentifizierer und einen Carrier-Identifizierer zu liefern und um von dem Bereitstellungssystem ein Dienstprofil zu empfangen, das Informationen zum Aktivieren einer Menge von von einem Diensteanbietersystem (220) spezifizierten Diensten aufweist.

## Revendications

1. Un procédé destiné à l'activation d'un ensemble de services pour un dispositif sans fil (210), l'ensemble de services étant spécifié par un système de fournisseur de services (220), le procédé comprenant :
la réception sur un système de mise en service (100, 224) en provenance du dispositif sans fil d'un identifiant de fournisseur de services destiné à identifier le système de fournisseur de services et un identifiant d'opérateur de transport destiné à identifier un système d'opérateur de transport (214), le système de mise en service étant couplé aux systèmes de fournisseur de services et d'opérateur de transport ;
l'identification de l'ensemble de services à l'aide de l'identifiant de fournisseur de services ; et
la transmission au dispositif sans fil par l'intermédiaire d'un réseau sans fil (200) accédé par le système d'opérateur de transport d'un profil de service possédant des informations destinées à activer l'ensemble de services.

2. Le procédé selon la Revendication 1 où le profil de service comprend une adresse de site web permettant d'accéder à un site hébergé par le système de mise en service (100, 224) pour le système de fournisseurs de services (220) afin de télécharger les informations destinées à activer l'ensemble de services.

3. Le procédé selon la Revendication 1 ou 2 et comprenant en outre :
la transmission au système d'opérateur de transport (214) de l'identifiant de fournisseur de services pour l'ensemble de services.

4. Le procédé selon l'une quelconque des Revendications 1 à 3 et comprenant en outre :
la détermination si l'ensemble de services est pris en charge par le système d'opérateur de transport (214) en comparant l'identifiant de fournisseur de services à une liste d'identifiants de fournisseurs de services correspondant à l'identifiant d'opérateur de transport.

5. Le procédé selon la Revendication 4 et comprenant en outre :
si l'ensemble de services n'est pas pris en charge par le système d'opérateur de transport (214), l'identification d'un ensemble de services fournis par le système d'opérateur de transport à l'aide de l'identifiant d'opérateur de transport.

6. Le procédé selon l'une quelconque des Revendications 2 à 5 où le site est destiné au système d'opérateur de transport (214).

7. Le procédé selon l'une quelconque des Revendications 1 à 6 où les identifiants de fournisseur de services (220) et d'opérateur de transport sont conservés en mémoire dans un dispositif à mémoire du dispositif sans fil (210).

8. Le procédé selon la Revendication 7 où le dispositif à mémoire est un module SIM (module d'identification d'abonné).

9. Le procédé selon la Revendication 8 où l'identifiant de fournisseur de services est conservé en mémoire dans un fichier élémentaire (EF) (330) conservé en mémoire dans le module SIM (module d'identification d'abonné).

10. Le procédé selon la Revendication 8 ou 9 où l'identifiant d'opérateur de transport est conservé en mémoire dans un ou plusieurs champs parmi un champ MCC (indicatif de pays de la station mobile) ou un champ MNC (code de réseau mobile) conservés en mémoire dans le module SIM (module d'identification d'abonné).

11. Le procédé selon l'une quelconque des Revendications 2 à 10 où l'adresse de site web est un URL (localisateur de ressources universel).

12. Le procédé selon l'une quelconque des Revendications 1 à 11 où l'ensemble de services comprend des services de courrier électronique.

13. Le procédé selon l'une quelconque des Revendications 1 à 12 et comprenant en outre :
l'activation de l'ensemble de services dans le système de mise en service (100, 224) pour le fournisseur de services (220).

14. Le procédé selon l'une quelconque des Revendications 1 à 13 où le système de mise en service (100, 224) est un deuxième système de fournisseur de services.

15. Un système (100, 224) destiné à l'activation d'un ensemble de services pour un dispositif sans fil, l'ensemble de services étant spécifié par un système de fournisseur de services (220), le système comprenant : un processeur (120) couplé à une mémoire (130) et une interface (150) vers un réseau sans fil (200) et adapté de façon à mettre en oeuvre le procédé selon l'une quelconque des Revendications 1 à 14.

16. Un programme informatique possédant un support lisible par ordinateur incorporant de manière tangible du code exécutable par ordinateur permettant de diriger un système de mise en service (100, 224) destiné à activer un ensemble de services pour un dispositif sans fil (210), l'ensemble de services étant spécifié par un système de fournisseur de services (220), ledit programme informatique comprenant : du code destiné à mettre en oeuvre le procédé selon l'une quelconque des Revendications 1 à 14.

17. Un dispositif sans fil mobile (210) utilisable à l'intérieur d'un réseau sans fil (200), ledit dispositif mobile possédant un support lisible par ordinateur incorporant de manière tangible du code informatique exécutable sur un processeur dudit dispositif mobile de façon à commander ledit dispositif mobile afin de fournir à un système de mise en service de dispositif sans fil (100, 224) un identifiant de fournisseur de services et un identifiant d'opérateur de transport et afin de recevoir dudit système de mise en service un profil de service possédant des informations destinées à activer un ensemble de services spécifié par un système de fournisseur de services (220).
